# EUROPEAN PATENT APPLICATION

(11) **EP 2 769 838 A1**
(43) Date of publication of application: **27.08.2014**
(21) Application number: 13155925.4
(22) Date of filing: 20.02.2013
(51) Int. Cl.: B32B 21/04, B32B 21/13, B32B 21/14, B32B 3/30, B27M 3/04

(54) **Plywood**

(71) Applicant: UPM-Kymmene Wood Oy, 15140 Lahti (FI)
(72) Inventor: Marttila, Pasi, 15540 Villähde (FI)
(74) Representative: Kolster Oy Ab

(57) **Abstract**

Plywood comprises a number of veneer layers stacked on top of the other and glued together with an adhesive. The plywood has a top surface veneer layer providing a top surface of the plywood and a bottom surface veneer layer providing a bottom surface of the plywood. At least the top surface of the plywood is coated with a coating material and at least the top surface of the plywood comprises first protrusions and second protrusions, the second protrusions being arranged on top of the first protrusions. The first protrusions consist of at least the coating material and the second protrusions comprise strips of coating material oriented away from the top surface of the plywood.

## Description

### FIELD OF THE INVENTION

The invention relates to plywood.

### BRIEF DESCRIPTION OF THE INVENTION

The invention is characterized by the features of the independent claims.

According to an embodiment, plywood comprises a number of veneer layers stacked on top of the other and glued together with an adhesive, the plywood having a top surface veneer layer providing a top surface of the plywood and a bottom surface veneer layer providing a bottom surface of the plywood, and wherein at least the top surface of the plywood is coated with a coating material and at least the top surface of the plywood comprises first protrusions and second protrusions, the second protrusions being arranged on top of the first protrusions, the first protrusions consisting of at least the coating material and the second protrusions comprising strips of coating material oriented away from the top surface of the plywood.

According to an embodiment of the plywood, the first protrusions consist of the coating material and wood material of at least the top surface veneer layer.

According to an embodiment of the plywood, the first protrusions are provided by surface profiling pressed in at least the top surface veneer layer and/or the coating material.

According to an embodiment of the plywood, the second protrusions are provided by bringing the coating material applied on the top surface of the plywood to the boil.

According to an embodiment of the plywood, a height of the first protrusions is at least 0.01 mm.

According to an embodiment of the plywood, a height of the second protrusions is at least 0.01 mm.

According to an embodiment of the plywood, a length of an edge of the first protrusion is at least 0.2 mm.

According to an embodiment of the plywood, a size of the second protrusions is at least 0.01 mm.

According to an embodiment of the plywood, a friction coefficient of the first surface of the plywood is at least 0.25.

According to an embodiment of the plywood, a gloss value of the first surface of the plywood is at most 8.

According to an embodiment of a method for manufacturing plywood, the method comprises laying veneers of wood material on top of the other for providing a number of successive veneer layers, each veneer layer comprising at least one veneer, applying an adhesive between the veneer layers, applying a coating material at least on a top surface of the plywood, and pressing the veneer layers together, wherein at least the top surface of the plywood is provided with first protrusions and second protrusions, the second protrusions being arranged on top of the first protrusions, the first protrusions being provided in at least the coating material and the second protrusions being provided by strips of coating material oriented away from the top surface of the plywood.

According to an embodiment of the method for manufacturing plywood, the first protrusions are provided in the coating material and wood material of at least the top surface veneer layer.

According to an embodiment of the method for manufacturing plywood, the first protrusions are pressed in at least the top surface veneer layer and/or the coating material by means of a surface profiling element when pressing the veneer layers together.

According to an embodiment of the method for manufacturing plywood, the second protrusions are provided by bringing the coating material applied on the top surface of the plywood to the boil when pressing the veneer layers together.

According to an embodiment of the method for manufacturing plywood, liquid comprising at least water is applied on the top surface of the top surface veneer layer or on top of the coating material layer for bringing the coating material to the boil.

According to an embodiment of the method for manufacturing plywood, an amount of water to be applied on the top surface of the top surface veneer layer or on top of the coating material layer is at least 10 grams per one square metre.

According to an embodiment of a freight transport means or a freight transport unit of a freight transport means, the freight transport means or a freight transport unit of a freight transport means comprises at least one cargo space provided with a flooring, the flooring comprising at least one plywood board made of plywood according to any one of claims 1 to 10.

According to an embodiment of a flooring for a cargo space of a freight transport means or a freight transport unit of the freight transport means, the flooring comprises at least one plywood board made of plywood according to any one of claims 1 to 10.

Herein, the freight transport means refers to any freight transport means which may be used for transporting loads or cargoes from one place to another either by rail or by road and which comprises at least one cargo space for receiving cargo to be transported and which freight transport means comprises power generation and transmission means such that the freight transport means may move without external devices for power source and transmission.

Herein, the freight transport unit of a freight transport means refers to a freight transport unit intended to be used in sea, rail or road transportation and which comprises a cargo space for receiving cargo to be transported and which may be either loaded into a cargo space of the freight transport means or coupled or connected to the freight transport means such that the freight transport unit forms a part of the freight transport means when coupled or connected to the freight transport means.

The freight transport means may be a lorry or a trailer lorry used in road transport. When the freight transport means is a lorry, the cargo space of the freight transport means may be an open platform comprising a floor provided with or without walls and constructed fixedly onto the chassis of the lorry, whereby the floor and possible walls define the cargo space of the lorry. The cargo space of the lorry may also be an open platform provided with or without walls and coupled fixedly to the chassis of the lorry or an open platform provided with or without walls and coupled detachably to the chassis of the lorry. The cargo space of the lorry may also be a closed platform provided with walls and a roof and constructed fixedly onto the chassis of the lorry or a closed container coupled fixedly or detachably to the chassis of the lorry, whereby the floor, walls and roof of the platform or container define the cargo space of the lorry.

When the freight transport means is a trailer lorry comprising a drawing vehicle and at least one trailer, the drawing vehicle forms the drawing unit of the freight transport means and the trailer forms the freight transport unit of the freight transport means. The trailer lorry may be a semitrailer combination truck, a full trailer combination truck or some other kind of trailer lorry comprising at least one drawing vehicle and at least one trailer. The drawing vehicle may or may not comprise a cargo space. If the drawing vehicle comprises a cargo space, the cargo space may be implemented in any way explained above in connection with the lorry. The trailer of the lorry may be an open trailer comprising a floor and provided with or without walls, or a closed trailer comprising a floor, side and end walls and a roof, whereby the floor and possible walls and roof define the cargo space of the trailer.

When the freight transport means is a lorry or a trailer lorry, the freight transport unit of the freight transport means may also be an open demountable platform comprising a floor and provided with or without walls, which platform may be coupled to a lorry or a trailer by placing it onto the chassis of the lorry or trailer and locked to the lorry or trailer either detachably or fixedly. The freight transport unit of the freight transport means may also be a closed freight container, which may be coupled to a lorry or a trailer by placing it onto the chassis of the lorry or the trailer and locked to the lorry or trailer either detachably or fixedly.

The freight transport means may also be a van, a pickup van or a similar vehicle.

The freight transport means may also be a train comprising at least one locomotive and a number of railway wagons, whereby the locomotive and the railway wagons coupled to the locomotive form the freight transport means, the locomotive forming a drawing unit of the freight transport means and each railway wagon individually forming a single freight transport unit of the freight transport means and comprising a cargo space for receiving cargo. The bottom of the wagon provides the floor of the cargo space of the wagon. The wagon may also comprise side and/or end walls and a roof, which in such a case also contribute to defining the cargo space of the wagon.

The freight transport unit of the freight transport means may also be a shipping container comprising a floor, side and end walls as well as a roof for providing a closed cargo space of the freight transport unit.

### BRIEF DESCRIPTION OF THE DRAWINGS

In the following, the invention will be described in greater detail by means of preferred embodiments and with reference to the accompanying drawings, in which
Figure 1 schematically shows a side view of a general structure of plywood in a form of a plywood board;
Figures 2 and 3 schematically show an example relating to manufacture of plywood,
Figure 4 schematically shows a top view of a second plywood board;
Figure 5 schematically shows a side view of the plywood board of Figure 4;
Figure 6 schematically shows a side view of a third plywood board;
Figure 7 schematically shows a side view of a fourth plywood board;
Figure 8 schematically shows a side view of a freight transport means and a freight transport unit of a freight transport means;
Figure 9 schematically shows a top view of a loaded freight transport unit of the freight transport means of Figure 8;
Figure 10 schematically shows an example of a surface structure of plywood in a form of a histogram;
Figure 11 schematically shows an example of frictional properties of plywood in a form of a histogram, and
Figure 12 schematically shows an example of a gloss of a surface of plywood in a form of a histogram.

The figures disclose only some embodiments in an exemplary way and not in scale.

### DETAILED DESCRIPTION OF THE INVENTION

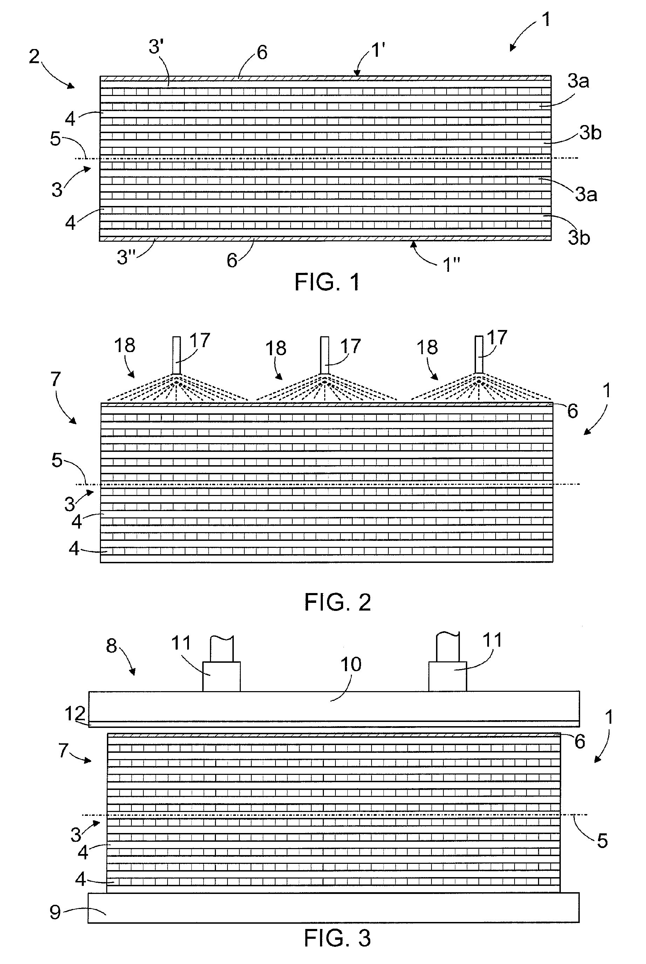

Figure 1 shows schematically a side view of a general structure of plywood 1, in a shape or a form of a plywood board 2. The plywood 1 comprises a number of veneer layers 3 formed of veneers 4 or plies 4 stacked on top of the other and glued together with an adhesive, such as phenol resin. The plywood 1 of Figure 1 comprises nineteen veneer layers 3 but the number of veneer layers 3 in the plywood 1 may vary in many ways, depending on the intended use of the plywood 1, for example. Each veneer layer 3 of the plywood 1 may comprise one or more adjacent veneers 4. For the sake of clarity, in the embodiment of Figure 1 each veneer layer 3 comprises only one veneer 4.

The veneer 4 is a sheet of wood material, which may be manufactured from a billet of wood material by rotary cut, quarter slicing, lengthwise slicing, plain slicing, half-round slicing or rift cut, for example. In rotary cut, a log is centered on a lathe and turned against a broad cutting knife set into the log at a slight angle. In quarter slicing, the slicing is made perpendicularly to the annual growth rings of the tree. Lengthwise slicing is typically made from a board of flat sawn. Plain slicing is made by slicing the log parallel to the centre of the log. In half-round slicing, the slicing is made on an arc parallel to the centre of the log. The rift cut, in turn, is a straight grain cut method which is provided by slicing the tree at a slight angle to minimize irregularities in the wood.

The plywood 1 has a top surface 1' or a first surface 1' provided by a top surface veneer layer 3' or a top veneer layer 3'. The plywood 1 has also a bottom surface 1" or a second surface 1" provided by a bottom surface veneer layer 3" or a bottom veneer layer 3". The veneers 4 in different veneer layers 3 are laid in the plywood 1 in such a way that the grain direction in some veneer layers 3 of the plywood 1 is crosswise to the grain direction of the veneers 4 in some other veneer layers 3. In Figure 1, the veneer layers 3 having the grains of the veneers being directed perpendicularly to the plane of the paper are indicated with reference number 3a and the veneer layers 3 having the grains of the veneers being directed in the direction of the plane of the paper are indicated with reference number 3b. In the embodiment of Figure 1, the veneers 4 are arranged in such a way that the grain direction of the veneers 4 in each veneer layer 3 is crosswise to the grain direction of the veneers 4 in the adjacent veneer layers 3. The plywood 1 may, however, be constructed in such a way that there are some veneer layers 3 wherein the grain direction in the adjacent veneer layers 3 is the same. A centre line of the plywood 1 is indicated by reference number 5.

The top surface 1' of the plywood 1, as well as the bottom surface 1" of the plywood 1, may also be coated with a coating material. The coating material may, for example, be phenol resin, polyphenol or polyamide. The coating material may be applied to the top 1' and bottom 1" surfaces of the plywood 1 before pressing the veneer layers 3 together. A layer 6 of coating material is shown schematically in Figure 1 at outer surfaces of the top surface veneer layer 3' and the bottom surface veneer layer 3". In the figures, the thickness of the coating material layer 6 is exaggerated in relation to the thickness of the veneer layers 3.

Figures 2 and 3 show schematically an example relating to manufacture of plywood 1. When manufacturing plywood 1, veneers 4 of selected wood material are laid on top of the other such that successive veneer layers 3 are provided. Each veneer layer 3 comprises one or more adjacent veneers 4. Before laying the veneers on top of the other, the veneers have been manufactured from a billet of wood material and dried. Possible grading cutting may also have been applied to wet veneers before drying the veneers. If a veneer layer 3 is to comprise two or more adjacent veneers 4, the veneers 4 are typically joined together before the veneers are laid on top of the other. The veneer layers 3 arranged on top of each other form a plywood blank 7. The plywood blank 7 typically has a form of a rectangular board, which may have a certain width and a certain length, which may vary depending on the manufacturing line.

When the veneers are laid on top of the other, an adhesive is applied between the veneer layers 3. Typically, an adhesive is applied between the veneer layers 3 in such a way that the adhesive is applied at least on a surface of the veneer just before the veneer 4 is laid on top of the other in the plywood blank 7. The adhesive may be supplied either in liquid form or as impregnated into a carrier sheet, which may for example be a sheet of paper. After a predetermined number of veneer layers 3 is arranged in the plywood blank 7, a coating material may be applied either only on the top surface 1' of the plywood 1 or both on the top 1' and bottom 1" surfaces of the plywood 1, whereby a layer 6 of coating material is applied on the respective surface(s) of the plywood blank 7. The coating material may for example be phenol resin, polyphenol or polyamide and it may be supplied onto the surfaces 1', 1" of the plywood blank 7 either in liquid form or in the form of a coating material sheet.

After the application of the coating material on the top surface 1' of the plywood blank 7, the plywood blank 7 is supplied into a hot press 8 between a lower press plate 9 and an upper press plate 10 for pressing the veneer layers 3 of the plywood blank 7 together. The plywood blank 7 is pressed by pressing the press plates 9, 10 of the hot press 8 towards each other for example by supplying a pressure medium, such as hydraulic oil, to cylinders 11 coupled to the upper press plate 10. The upper press plate 10 then moves towards the lower press plate 9, whereby the veneer layers 3 in the plywood blank 7 will be pressed together. The temperature in the press 8 may be for example 110 to 210°C and the pressure may be for example 0.5 to 3.0 MPa. The total press time may be for example 0.5 to 20 minutes. The hot press 8 may also comprise a surface profiling element 12 attached to the upper press plate 10, which surface profiling element 12 may be used for providing the top surface 1' of the plywood 1 with a certain surface profiling. After the pressing step has been completed, the hot press 8 is opened and the plywood blank 7 may be removed from the hot press 8 for further processing, such as for cutting the plywood blank 7 into plywood boards 2 having a suitable size.

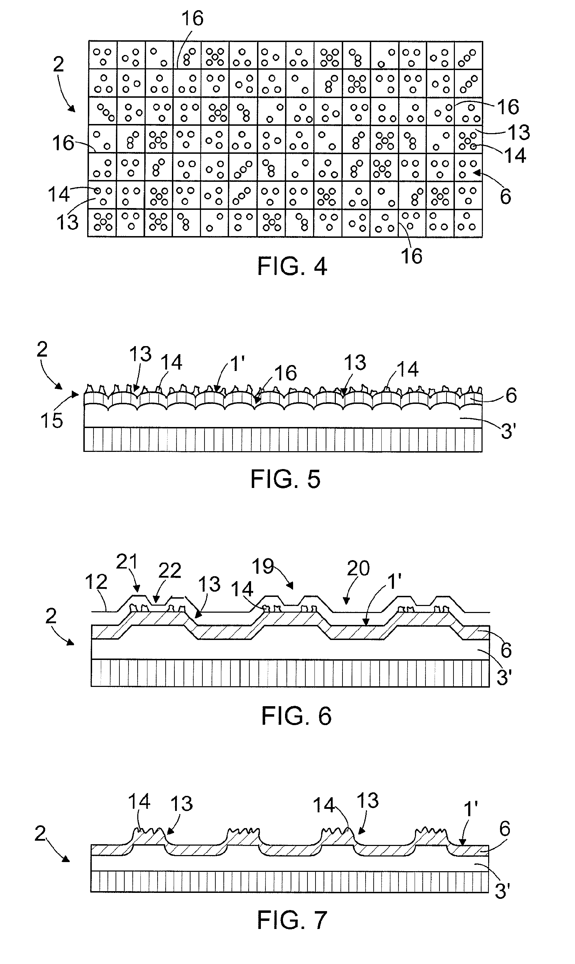

Figure 4 shows schematically a top view of a second plywood board 2 while Figure 5 shows schematically a side view of the plywood board 2 of Figure 4. For the sake of clarity, Figure 5 shows only two topmost veneer layers 3 of the plywood board 2, the top surface veneer layer being denoted by reference number 3', as above. The plywood board 2 of Figures 4 and 5 also comprises a layer 6 of coating material provided on the top surface 1' of the plywood 1. For the sake of clarity the thickness of the coating material layer 6 has been exaggerated in relation to the thickness of the veneer layers 3 in Figure 5. The top surface 1' of the plywood board 2 of Figures 4 and 5 comprises first protrusions 13 and second protrusions 14 extending away or oriented away from the top surface 1' of the plywood board 2.

The first protrusions 13 consist of a surface profiling 15 pressed on the top surface 1' of the plywood board 2 in the hot press 8 by using a surface profiling element 12 having an embodiment of a wire mat, such as wire mesh, made of metal or plastic, for example. In the hot press 8, wires of the wire mat press into the top surface 1' of the plywood board 2 grooves 16, between which the first protrusions 13 are formed. In the embodiment shown in Figure 5, the hot press 8 has pressed the wire mat against the top surface 1' of the plywood so hard that the grooves 16 extend to the wood material of the top surface veneer layer 3'. In Figure 5, the first protrusions 13 thus comprise both the wood material of the top surface veneer layer 3' and the coating material on the top surface 1' of the plywood board 2 or, in other words, in Figure 5 the first protrusions 13 consist of both the wood material of the top surface veneer layer 3' and the coating material applied on the top surface 1' of the plywood board 2. Alternatively, the wire mat may be pressed against the top surface 1' of the plywood blank 7 with a minor force so that the grooves 16 only extend in the coating material layer 6 on the top surface 1' of the plywood billet 7, whereby the first protrusions only comprise the coating material applied on the top surface 1' of the plywood board 2, or in other words, the first protrusions only consist of the coating material applied on the top surface 1' of the plywood board 2.

The second protrusions 14 comprise strips of coating material. The second protrusions 14 are thus formed of the coating material applied on the top surface 1' of the plywood 1 in such a way that a top surface of the coating material layer 6 is broken, providing strips of coating material oriented away from the top surface of the plywood 1, whereby the strips of coating material form in the top surface 1' of the plywood 1 microstructures having a form or a shape resembling the form or the shape of a crater or a pore. One way to achieve such strips of coating material is to spray some liquid comprising at least water onto the coating material layer 6 or onto the top surface veneer layer 3' before the coating material layer 6 is applied on the top of the top surface veneer layer 3'. The liquid increases the moisture content of the top surface veneer layer 3' or the coating material layer 6 before the plywood blank 7 is supplied into the hot press 8. Preferably, the liquid is composed only of water. Figure 2 further schematically shows nozzles 17 for providing water sprays 18. In the hot press 8, owing to the influence of water, the top surface of the coating material layer 6 starts to boil, the boiling causing the top surface of the coating material layer 6 to blister, whereby blisters burst and form strips of coating material oriented away from the top surface 1' of the plywood board 2.

In the embodiment of Figure 5, as well as in the embodiments of Figures 6 and 7 below, the layer 6 of coating material is provided on top of the top surface veneer layer 3' in the form of a sheet of coating material, whereby an even boiling effect on the top surface of the coating material layer 6 may be ensured. The amount of liquid may be for example some tens of grams per one square metre. The amount of liquid may be for example such that there is one portion of water to six portions of coating material.

An amount of water to be applied on the top surface of the top veneer layer 3' or on top of the coating material layer 6 may be for example 10 grams per one square metre or at least 10 grams per one square metre. Alternatively, the amount of water may be 20 grams or at least 20 grams per one square metre, 40 grams or at least 40 grams per one square metre, 70 grams or at least 70 grams per one square metre or 100 grams, or at most 100 grams per one square metre. According to an embodiment, the amount of water may be 10 to 100 grams per one square metre.

Figure 6 shows schematically a side view of a third plywood board 2. As Figure 5, Figure 6 shows, for the sake of clarity, only two topmost veneer layers 3 of the plywood board 2, the top surface veneer layer being denoted by reference number 3'. The top surface 1' of the plywood board 2 of Figure 6 comprises first protrusions 13 and second protrusions 14 extending away or oriented away from the top surface 1' of the plywood board 2. Figure 6 also schematically shows a surface profiling element 12 which may be used for manufacturing the plywood board 2 of Figure 6.

The surface profiling element 12 comprises first ridges 19 between which first grooves 20 reside. The first ridges 19 and the first grooves 20 of the surface profiling element 12 provide on the top surface 1' of the plywood board 2 ridge-like first protrusions 13 extending away or oriented away from the top surface 1' of the plywood board 2. In the embodiment of Figure 6, the surface profiling element 12 has again been pressed against the top surface 1' of the plywood so hard that the first protrusions 13 again comprise or consist of both the wood material of the top surface veneer layer 3' and the coating material on the top surface 1' of the plywood board 2. The first ridges 19 of the surface profiling element 12 comprise two second ridges 21 between which there a second groove 22 resides. The second ridges 21 provide a space wherein the top surface of the coating material layer 6 may boil so that the second protrusions 14 in the form of strips of coating material may be formed on top of the first protrusions 13.

Figure 7 shows schematically a side view of a fourth plywood board 2. As in Figures 5 and 6, Figure 7 also shows, for the sake of clarity, only two topmost veneer layers 3 of the plywood board 2, the top surface veneer layer being denoted by reference number 3'. The top surface 1' of the plywood board 2 of Figure 7 comprises first protrusions 13 and second protrusions 14 extending away or oriented away from the top surface 1' of the plywood board 2.

In the embodiment of Figure 7, the surface profiling element has again been pressed against the top surface 1' of the plywood so hard that the first protrusions 13 again comprise or consist of both the wood material of the top surface veneer layer 3' and the coating material on the top surface 1' of the plywood board 2. The second protrusions 14, in turn, comprise or consist of strips of coating material formed as a consequence of the boiling of the top surface of the coating material layer on the top surface 1' of the plywood 1. In the manufacture of the plywood board 2 of Figure 7, a surface profiling element having the form of a flat plate and comprising apertures through the plate at distances from one another may be used. The cross-sectional shape of the apertures may be for example round or polygonal.

In the plywood 1, the first protrusions 13 provide first frictional elements for increasing frictional properties or a friction coefficient of the top surface 1' of the plywood 1. The second protrusions 14, in turn, provide second frictional elements for increasing the frictional properties or the friction coefficient of the top surface 1' of the plywood 1. The friction coefficient of the top surface 1' of the plywood 1 may be affected by heights of the first protrusions 13 and second protrusions 14 or by a ratio of the height of the first protrusions 13 to that of the second protrusions 14. When the height of the first protrusions 13 and the second protrusions 14 increases, the friction coefficient of the top surface 1' of the plywood 1 becomes higher. The height of the first protrusions may be increased by increasing the pressure in the hot press 8, whereby the surface profiling element 12 will be pressed deeper into the wood material of the top surface veneer layer 3'. The height of the second protrusions 14 may be increased by increasing the amount of water applied on the top surface of the top surface veneer layer 3' or on the coating material layer 6.

According to an embodiment of the plywood 1, the ratio of the height of the first protrusions 13 to the height of the second protrusions 14 is at least 0.1. The ratio of the height of the first protrusions 13 to the height of the second protrusions 14 may be for example 0.1 to 45.0

The height of the first protrusions 13 is at least 0.01 mm. This minimum height of the first protrusions 13 corresponds to the thickness of the coating material layer in finished plywood 1, when the coating material layer is provided by a sheet of coating material having a weight of 120 grams per one square meter and when the first protrusions 13 only extend in the coating material layer 6. Preferably, the first protrusions 13 also extend in the wood material of the top surface veneer layer. The height of the first protrusions 13 may be for example 0.01 to 0.40 mm, preferably 0.05 to 0.40 mm.

The height of the second protrusions is at least 0.01 mm. As stated above, the height of the second protrusions 14 depends on the amount of water spread on the top surface of the top surface veneer layer 3' or on the coating material layer 6. The height of the second protrusions 14 may be for example 0.01 to 0.45 mm.

The height of the first protrusions 13 and the second protrusions 14 may be measured for example from a profile of a cross section of a plywood board by employing a measurement method based on the use of a microscope, for instance.

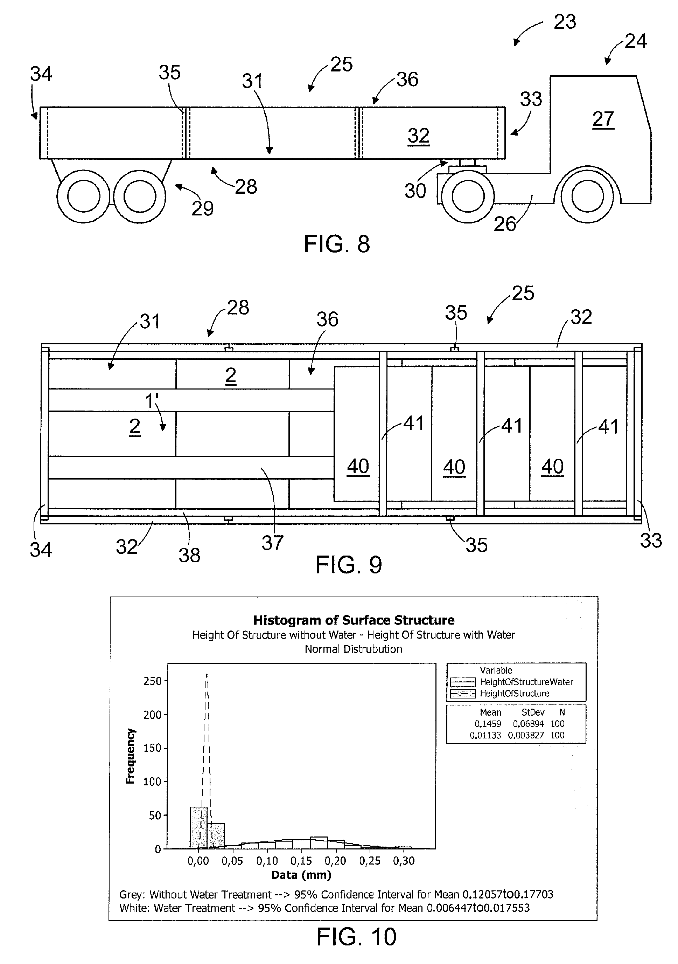

Figure 10 discloses, in the form of a histogram, a schematic example of a surface structure of plywood comprising both first and second protrusions vs. a surface structure of the same plywood comprising first protrusions only. The second protrusions are provided by applying water on the surface of the plywood as disclosed above. In Figure 10, white columns present measurement results obtained from the plywood surface comprising both first and second protrusions, i.e. obtained from the plywood surface exposed to extra water as disclosed above, the term surface structure in this case referring to both the first protrusions and the second protrusions. Grey columns present measurement results obtained from the plywood surface comprising only first protrusions, i.e. obtained from the plywood surface which is not exposed to extra water as disclosed above, the term surface structure in this case referring to the first protrusions only. The measurement results presented by the white columns thus describe the common heights of the first protrusions and the second protrusions and the measurement results presented by the grey columns describe the heights of the first protrusions only. The weight of a sheet of coating material used in the example of Figure 10 was 120 grams per one square meter and it was made of phenol resin, and the first protrusions were obtained by using a surface profiling element having the form of a wire mesh. The total number of measurements was 100. The example of Figure 10 shows the increasing effect of water applied on the surface of the plywood on the height of the surface structure of the plywood.

A size of the first protrusions 13 also has an effect on the frictional properties of the top surface 1' of the plywood 1. The size of the first protrusion 13 refers to an area of the first protrusion 13 in the plane of the surface of the plywood 1, the area of a single first protrusion 13 being determined by the grooves surrounding that specific first protrusion 13, the grooves forming the edges of the first protrusion 13. If the area of the first protrusion 13 is either too small or too large, no proper frictional properties are achieved. According to an embodiment of the plywood 1, a length of one edge of the first protrusion is at least 0.2 mm, for example 0.5 to 10 mm, and preferably 2.0 to 5.0 mm. In the embodiment of Figure 4, the first protrusion 13 has the shape or form of a square but the shape or form of the first protrusion 13 may also be that of another rectangle or it may also be triangular, hexagonal or octagonal, for instance.

A size of the second protrusions 14 has an effect on the frictional properties of the top surface 1' of the plywood 1. The size of the second protrusion 14 refers to a diameter of the second protrusion 14 in the direction of the plane of the surface of the plywood 1. The greater the diameter of the second protrusion 14, the greater the length of the edges of the strips of coating material forming the second protrusions 14, and thereby the higher the value of the frictional coefficient of the surface of the plywood. The size of the second protrusion 14 may be affected by the amount of water applied on the top surface of the top surface veneer layer or on the coating material layer, whereby by increasing the amount of water the size of the second protrusions 14 may be increased. However, if the sizes of the second protrusions are too great, the number of second protrusions may decrease, which may also decrease the value of the frictional coefficient to be achieved. The size of the second protrusion 14 is at least 0.01 mm, for example 0.01 to 0.15 mm, preferably 0.05 to 0.10 mm.

The value of the friction coefficient of the top surface 1' of the plywood 1 is at least 0.25. Depending on the different factors stated above, the value of the friction coefficient of the top surface 1' of the plywood 1 may be for example 0.30 to 0.85, preferably at least 0.60 or 0.60 to 0.80. The friction coefficient values stated above refer to a value of a static friction coefficient of the surface of the plywood 1.

When considering frictional properties of a surface, the frictional properties or a friction coefficient of the surface is generally determined in respect of a counterpart laid on the surface. When considering the frictional properties of the top surface 1' of the plywood 1 as described above, the frictional properties or the friction coefficients as disclosed above are determined in respect of a piece of wood material as the counterpart against the top surface 1' of the plywood 1. The piece of wood material may be for example a loading pallet made of wood, such as spruce or pine.

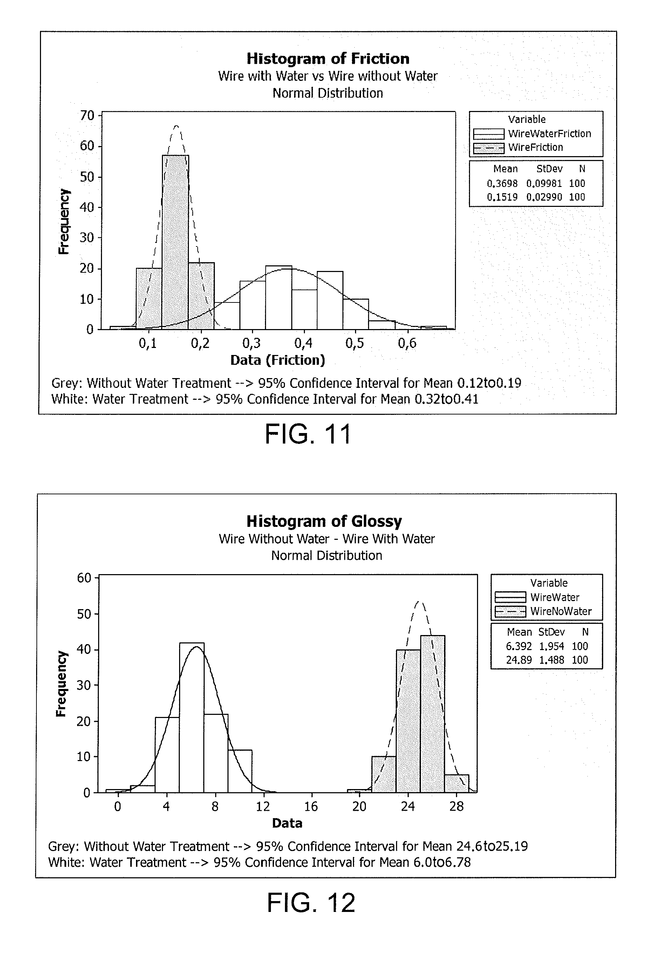

Figure 11 discloses, in the form of a histogram, a schematic example of frictional properties of plywood comprising both first and second protrusions vs. frictional properties of the same plywood comprising first protrusions only. The second protrusions are provided by applying water on the surface of the plywood as disclosed above. In Figure 11, white columns present measurement results obtained from the plywood surface comprising both first and second protrusions while grey columns present measurement results obtained from the plywood surface comprising first protrusions only. The weight of a sheet of coating material used in the example of Figure 11 was 120 grams per one square meter and it was made of phenol resin, and the first protrusions were obtained by using a surface profiling element having the form of a wire mesh. The total number of measurements was 100. The example of Figure 11 shows the increasing effect of the water applied on the surface of the plywood on the friction of the plywood surface.

The frictional properties of the surface of the plywood 1 may also be inspected by inspecting a gloss of the surface of the plywood 1. The gloss value of the top surface 1' of the plywood 1 disclosed above is at most 8, preferably at most 7.5, and more preferably at most 7, when the gloss value for a surface being completely glossy is 100. A very low gloss value, i.e. a gloss value of at most 8, indicates that the boiling of the surface of the coating material layer has succeeded as appropriate in view of the frictional properties of the surface of the plywood 1. When the gloss value of the surface of the plywood is determined, a reference light is focused on the surface of the plywood at an angle of 60 degrees, for example, and the reflection of the reference light from the surface of the plywood is then measured.

Uniformity of the frictional properties or the friction coefficient of the top surface 1' of a plywood board 2 made of plywood 1 as described above may thus also be controlled by inspecting light reflectivity characteristics of the top surface of the plywood 1. When the frictional properties or the friction coefficient of the top surface 1' of plywood 1 are substantially the same over the whole area of the top surface 1' of plywood 1, the light scattering from the top surface 1 of the plywood is substantially the same over the whole area of the top surface 1' of plywood 1. The uniformity of the frictional properties or the friction coefficient of the top surface 1' of the plywood board 2 may be inspected by visual inspection only or by using specialized light scattering measurement devices.

Figure 12 discloses, in the form of a histogram, a schematic example of a gloss of a surface of plywood comprising both first and second protrusions vs. a gloss of a surface of the same plywood comprising first protrusions only. The second protrusions are provided by applying water on the surface of the plywood as disclosed above. In Figure 12, white columns present measurement results obtained from the plywood surface comprising both first and second protrusions while grey columns present measurement results obtained from the plywood surface comprising first protrusions only. The weight of a sheet of coating material used in the example of Figure 12 was 120 grams per one square meter and it was made of phenol resin, and the first protrusions were obtained by using a surface profiling element having the form of a wire mesh. The total number of measurements was 100. The example of Figure 12 shows the decreasing effect of the water applied on the surface of the plywood on the gloss of the plywood surface.

Figure 8 shows schematically a side view of a freight transport means 23 intended for road transport for carrying loads or cargoes from one place to another. The freight transport means 23 comprises a lorry 24 and a trailer 25, which is detachably coupled to the lorry 24. The trailer 25 provides a kind of a freight transport unit of the freight transport means 23 and the lorry 24 provides a kind of a drawing vehicle or a drawing unit of the freight transport means 23.

The lorry 24 comprises a chassis 26 and a driver's cab 27. The trailer 25 comprises a frame structure 28 to which a bogie unit 29 is attached, as well as coupling means 30 for coupling the trailer 25 to the lorry 24. The trailer 25 further comprises a flooring 31 fastened to the frame structure 28, as well as sideboards 32, a facing board 33 and a backboard 34. When the trailer 25 is in use, the sideboards 32, the facing board 33 and the backboard 34 may be supported against support beams 35 denoted in broken lines. The sideboards 32 provide sidewalls of the trailer 25, and the facing board 33 and the backboard 34 provide a front wall and a back wall of the trailer 25. The flooring 31, the sideboards 32, the facing board 33, and the backboard 34 together contribute to defining a cargo space 36 of the trailer 25 of Figure 8. The trailer 25 may also comprise a tarpaulin which provides the roof of the trailer 25, and it may also provide part of the sidewalls, the front wall and the back wall of the trailer. For the sake of clarity, no tarpaulin is shown in Figure 8.

Figure 9 shows schematically a top view of the trailer 25 of Figure 8. The frame structure 28 of the trailer 25 according to Figures 8 and 9 comprises two longitudinal main beams 37 having a top surface 37' and two longitudinal side beams 38 having a top surface 38', as well as transverse frame beams 39, Figure 9 representing only some of the transverse frame beams 39 in broken lines. The longitudinal frame beams 37, the longitudinal side beams 38 and transverse frame beams 39 may be welded to each other.

Figure 9 further shows plywood boards 2, which are attached to the frame structure 28 of the trailer 25 for providing the flooring 31 of the cargo space 36 of the trailer 25, whereby the frame structure 28 of the trailer 25 and the plywood boards 2 together provide the floor structure of the cargo space 36. The plywood boards 2 may be for example those explained in connection with Figures 4 to 7. In the embodiment of Figure 9, the upper surfaces 37' of the longitudinal main beams 37 are left visible but in an alternative embodiment also the upper surfaces 37' of the longitudinal main beams 37 could be covered by the plywood boards 2. The plywood boards 2 are arranged in the flooring 31 of the cargo space 36 in such a way, that the top surface 1' of the plywood boards 2 faces towards the cargo space 29.

Figure 9 further schematically shows a top view of a loading arrangement in connection with the trailer 25. The loading arrangement of Figure 9 comprises the trailer 25 comprising the cargo space 36 provided with the flooring 31, the flooring 31 comprising plywood boards 2. The loading arrangement shown in Figure 9 also comprises a cargo loaded on the flooring in the cargo space, the cargo comprising a number of large boxes 40 placed for example on loading pallets (not shown). Further, the loading arrangement of Figure 9 also comprises load binders 41 or webbing straps 41 for supporting or fastening the cargo in the cargo space 36 after they have been tightened in connection with the cargo. The load binders 41 are arranged to run substantially in the width direction of the cargo space 36, whereby ends of the load binders 41 may be fastened for example to the longitudinal side beams 38 of the trailer 25.

According to an embodiment, the plywood boards are attached to a frame structure of a freight transport means or a freight transport unit of a freight transport means with an adhesive. When an adhesive, instead of screws, is used for attaching the plywood boards, local variations in the frictional properties of the flooring caused by screw locations can be avoided. At the same time the surface of the flooring remains undamaged, preventing any moisture from entering an internal structure of the boards.

According to an embodiment, the plywood boards are attached to the frame structure of the freight transport means or the freight transport unit of the freight transport means, in the flooring of the cargo space, in such a way that the top surface of the plywood boards, including the highest point in the top surface of the plywood boards, remains below the top surface of the longitudinal side beams. In this way, the edges of the plywood boards remain undamaged if the cargo to be loaded into the cargo space is moved or slid along the top surface of the longitudinal side beams and along the flooring of the cargo space when being loaded through the side of the cargo space. If the longitudinal main beams are visible, the top surfaces of the longitudinal main beams are at most at the same level as the top surfaces of the plywood boards. Also, if the longitudinal main beams are visible, the top surfaces of the longitudinal main beams may also be treated to have the same kind of frictional properties as the top surfaces of the plywood boards have.

It will be obvious to a person skilled in the art that, as technology advances, the inventive concept can be implemented in various ways. The invention and its embodiments are not limited to the examples described above but may vary within the scope of the claims. In the examples above only the top surface 1' of the plywood 1 comprises the first protrusions 13 and the second protrusions 14, but the same kind of first protrusions 13 and second protrusions 14 may also be provided in the bottom surface 1" of the plywood 1.

## Claims

1. Plywood comprising a number of veneer layers stacked on top of the other and glued together with an adhesive, the plywood having a top surface veneer layer providing a top surface of the plywood and a bottom surface veneer layer providing a bottom surface of the plywood, and wherein at least the top surface of the plywood is coated with a coating material and at least the top surface of the plywood comprises first protrusions and second protrusions, the second protrusions being arranged on top of the first protrusions, the first protrusions consisting of at least the coating material and the second protrusions comprising strips of coating material oriented away from the top surface of the plywood.

2. Plywood according to claim 1, wherein the first protrusions consist of the coating material and wood material of at least the top surface veneer layer.

3. Plywood according to claim 1 or 2, wherein the first protrusions are provided by surface profiling pressed in at least the top surface veneer layer and/or the coating material.

4. Plywood according to any one of the preceding claims, wherein the second protrusions are provided by bringing the coating material applied on the top surface of the plywood to the boil.

5. Plywood according to any one of the preceding claims, wherein a height of the first protrusions is at least 0.01 mm.

6. Plywood according to any one of the preceding claims, wherein a height of the second protrusions is at least 0.01 mm.

7. Plywood according to any one of the preceding claims, wherein a length of an edge of the first protrusion is at least 0.2 mm.

8. Plywood according to any one of the preceding claims, wherein a size of the second protrusions is at least 0.01 mm.

9. Plywood according to any one of the preceding claims, wherein a friction coefficient of the first surface of the plywood is at least 0.25.

10. Plywood according to any one of the preceding claims, wherein a gloss value of the first surface of the plywood is at most 8.

11. A method for manufacturing plywood, the method comprising
laying veneers of wood material on top of the other for providing a number of successive veneer layers, each veneer layer comprising at least one veneer,
applying an adhesive between the veneer layers,
applying a coating material at least on a top surface of the plywood, and
pressing the veneer layers together,
wherein at least the top surface of the plywood is provided with first protrusions and second protrusions, the second protrusions being arranged on top of the first protrusions, the first protrusions being provided in at least the coating material and the second protrusions being provided by strips of coating material oriented away from the top surface of the plywood.

12. A method according to claim 11, wherein the first protrusions are provided in the coating material and wood material of at least the top surface veneer layer.

13. A method according to claim 11 or 12, wherein the first protrusions are pressed in at least the top surface veneer layer and/or the coating material by means of a surface profiling element when pressing the veneer layers together.

14. A method according to any one of claims 11 to 13, wherein the second protrusions are provided by bringing the coating material applied on the top surface of the plywood to the boil when pressing the veneer layers together.

15. A method according to any one of claims 11 to 14, wherein liquid comprising at least water is applied on the top surface of the top surface veneer layer or on top of the coating material layer for bringing the coating material to the boil.

16. A method according to claim 15, wherein an amount of water to be applied is at least 10 grams per one square metre.

17. A freight transport means or a freight transport unit of a freight transport means comprising at least one cargo space provided with a flooring, the flooring comprising at least one plywood board made of plywood according to any one of claims 1 to 10.

18. A flooring for a cargo space of a freight transport means or a freight transport unit of the freight transport means, wherein the flooring comprises at least one plywood board made of plywood according to any one of claims 1 to 10.
